# FASCICULE DE BREVET EUROPEEN

(11) **EP 2 656 563 B1**
(45) Date de publication et mention de la délivrance du brevet: **25.07.2018**
(21) Numéro de dépôt: 11815698.3
(22) Date de dépôt: 22.12.2011
(51) Int. Cl.: H04L 12/28, H04L 12/46, H04L 12/721, H04L 12/717

(54) **PROCÉDÉ DE COMMUNICATION ENTRE DEUX ÉQUIPEMENTS DE TERMINAISON**
VERFAHREN ZUR KOMMUNIKATION ZWISCHEN ZWEI ELEMENTEN EINER ABSCHLUSSVORRICHTUNG
METHOD OF COMMUNICATION BETWEEN TWO ITEMS OF TERMINATION EQUIPMENT

(30) Priorité: 23.12.2010 FR 1061157
(43) Date de publication de la demande: 30.10.2013
(73) Titulaire: Orange, 75015 Paris (FR)
(72) Inventeur: JOUNAY, Frédéric, CH-1040 Echallens (CH); LE CLECH, Fabien, F-92130 Issy Les Moulineaux (FR)
(86) Numéro de dépôt international: PCT/FR2011/053169
(87) Numéro de publication internationale: WO 2012/085488

(56) Documents cités:
- J-M UZÉ: "VPLS: Virtual Private LAN Service", JRES 2003 5ÈMES JOURNÉES RÉSEAU, octobre 2003 (2003-10), pages 1-11, XP002651334, France
- U.D. Black: "ATM vol. III. Internetworking with ATM", 1998, Prentice hall PTR, USA, XP002651335, ISBN: 0-13-784182-5 pages 108-132, page 112, ligne 27 - page 116, ligne 2 figures 7-3,7-4,7-5
- BRYANT S ET AL: "Pseudo Wire Emulation Edge-to-Edge (PWE3) Architecture; rfc3985.txt", IETF STANDARD, INTERNET ENGINEERING TASK FORCE, IETF, CH, 1 mars 2005 (2005-03-01), XP015009756, ISSN: 0000-0003 cité dans la demande
- WITTERS J ET AL: "VPLS TECHNICAL TUTORIAL : Technical introduction to multipoint Ethernet services over MPLS", ALCATEL TELECOMMUNICATIONS REVIEW, COMPAGNIE FINANCIÈRE ALCATEL, 54 RUE DE LA BOÉTIE 75008 PARIS, 1 octobre 2004 (2004-10-01), XP007010179, ISSN: 1267-7167

## Description

L'invention se situe dans le domaine des télécommunications, et plus particulièrement les réseaux d'accès mobiles.

Le service VPLS ou *Virtual Private LAN Service* en terminologie anglo-saxonne, est un service permettant l'interconnexion entre une pluralité de réseaux IP (*Internet Protocol*) de communication, tels que par exemple des réseaux privatifs ou des réseaux d'entreprise. Le service VPLS permet de connecter ensemble une pluralité de réseaux IP correspondant par exemple à des sites d'une même entreprise éloignés les uns des autres de sorte à former une architecture multipoint-à-multipoint.

Un exemple de technologie de transmission de données utilisée lors de la mise en oeuvre du service VPLS est la technologie MPLS (*MultiProtocol Label Switching* ou en français : commutation multi-protocole par étiquette). La technologie MPLS propose de rajouter en entête des paquets de données une ou plusieurs étiquettes contenant des informations permettant aux équipements du réseau de déterminer le prochain saut qu'un paquet doit effectuer pour atteindre sa destination.

La technologie MPLS est décrite plus en détail dans un document de l'IETF (groupe de standardisation de l'Internet, abréviation des termes anglais *Internet Engineering Task Force*), référencé RFC 3031 (RFC signifiant « requête pour commentaires », ou en anglais *Request For Comments*)*.*

Lors de la mise en oeuvre du service VPLS, des équipements appartenant à différents réseaux LAN sont connectés entre eux au moyen de chemins MPLS appelés LSP (*Label Switched Path,* ou chemin commuté par étiquette en français).

Un chemin LSP est établi depuis un équipement terminal de tête (ou équipement Ingress), au travers d'équipements intermédiaires et vers un équipement terminal de destination (ou équipement Egress).

Cependant, la technologie MPLS ne permet de traiter que des paquets conformes au protocole IP.

Afin de pallier cet inconvénient, le groupe de standardisation PWE3 (*PseudoWire Emulation Edge to Edge*) de l'IETF définit un concept de circuit virtuel permettant d'émuler un lien bidirectionnel entre deux équipements de deux réseaux LAN distincts reposant sur la technologie IP/MPLS. De tels pseudo-liens, définis dans le document RFC 3985, permettent la transmission de paquets de données non-conformes au protocole IP, tels que par exemple des trames de données conformes au protocole Ethernet tel que défini dans le document de l'IETF référencé RFC 4448.

Ainsi, le service VPLS consiste en l'établissement de pseudo-liens conformes au protocole Ethernet entre des équipements de communication appartenant à différents réseaux. De tels pseudo-liens sont établis au niveau de la couche liaison de données telle que définie dans le modèle OSI (*Open Systems Interconnection,* ou interconnexion de systèmes ouverts en français) défini par l'ISO (Organisation Internationale de Normalisation). Les pseudo-liens ainsi établis sont par exemple des pseudo-liens conformes au protocole Ethernet. De tels pseudo-liens Ethernet sont supportés par un chemin sous-jacent tel que des liaisons, par exemple des tunnels conformes au protocole LSP (*Label Switched Path*) défini dans le document de l'IETF RFC 3031.

Lors de la mise en oeuvre du service VPLS, chaque équipement terminal appartenant à un réseau IP est connecté à une pluralité d'autres équipements terminaux appartenant à d'autres réseaux IP au moyen de pseudo-liens Ethernet créant ainsi une connexion entre les différents équipements terminaux. Cependant une telle architecture est figée lors de l'établissement des différents pseudo-liens Ethernet et n'évolue pas au cours de l'exploitation du service VPLS.

Ainsi, lorsque de nouveaux pseudo-liens sont requis afin de raccorder d'autres équipements de communication entre eux, l'architecture sous-jacente à la mise en oeuvre du service VPLS n'est pas adaptée.

Le document "ATM vol.III, Internetworking with ATM", 1998, Prentice Hall PTR, de Uyless D. Black, pages 112 à 116, enseigne comment établir un circuit virtuel entre deux équipements ATM émulateurs de réseau local Ethernet, mais ne suggère pas comment un tel équipement ATM émulateur de réseau local Ethernet peut détecter le besoin pour ce circuit virtuel et en automatiser l'établissement.

Un des buts de l'invention est de remédier à des inconvénients de l'état de l'art.

A cette fin, l'invention propose un procédé de communication entre un premier équipement de terminaison (PE2) et au moins un deuxième et un troisième équipement de terminaison (PE1, PE3) appartenant à un réseau de commutation de paquets, un premier pseudo-lien (pw1) étant établi entre le premier et le deuxième équipement de terminaison, et un deuxième pseudo-lien (pw2) étant établi entre le premier et le troisième équipement de terminaison, le procédé comprenant les étapes suivantes mises en oeuvre par le premier équipement de terminaison :
- interception d'une trame de données émise par un premier équipement client connecté au deuxième équipement de terminaison à destination d'un deuxième équipement client, la trame de données comprenant un identifiant du premier équipement client et un identifiant du deuxième équipement client,
- détermination d'un paramètre d'identification du deuxième équipement de terminaison à partir de l'identifiant du premier équipement client,
- détermination d'un paramètre d'identification du troisième équipement de terminaison auquel est connecté le deuxième équipement client à partir de l'identifiant du deuxième équipement client,
- émission, à destination du deuxième équipement de terminaison, d'une demande d'établissement d'un troisième pseudo-lien entre le deuxième équipement de terminaison et le troisième équipement de terminaison au travers duquel les données émises par le premier équipement client sont destinées à être transmises.

Une telle solution permet d'adapter le plan de transfert des données aux besoins des équipements clients, tels que par exemple des stations de base LTE (Long Term Evolution) ou 4G lors d'échanges de données entre équipements clients voisins, tels que des messages de signalisation entre stations de bases ou de données utilisateur, lors de la mise en oeuvre de procédures de changement de stations de base ou Handover.

Un pseudo-lien est établi au besoin afin de transmettre des données entre le deuxième et le troisième équipement de terminaison. Les données sont alors transmises directement entre les équipements de terminaison auxquels sont connectés les équipements clients.

La solution objet de l'invention permet d'économiser des ressources du réseau car seuls des pseudo-liens destinés à transmettre un flux de données entre deux équipements de terminaison sont établis évitant une réservation inutile des ressources du réseau contrairement au modèle d'architecture dit architecture maillée (ou full-mesh en anglais). Dans un tel modèle d'architecture, des pseudo-liens sont établis entre tous les équipements de terminaison de sorte que des flux de données peuvent être échangés entre toutes les stations de base consommant alors des ressources du réseau sans que cela soit nécessaire.

La solution objet de l'invention offre ainsi une souplesse dans l'établissement des pseudo-liens puisque celui-ci se fait au besoin, une telle solution présente ainsi un intérêt au cours de l'exploitation du réseau.

De plus la solution objet de l'invention permet de réduire le temps de transmission des données entre les deux équipements client contrairement aux architectures dites Hub and Spoke, dans lesquels les données émises par un équipement client transitent obligatoirement par l'équipement maître ou Hub. Dans un tel modèle d'architecture, chaque équipement client est connecté à l'équipement de terminaison maitre au travers d'un pseudo-lien établi entre l'équipement de terminaison maître et un équipement de terminaison auquel l'équipement client est connecté.

Selon une caractéristique particulière du procédé de communication objet de l'invention, la demande d'établissement du troisième pseudo-lien comprend un paramètre représentatif de la durée de veille maximale autorisée pour le troisième pseudo-lien.

Une durée de veille pour un pseudo-lien est un intervalle de temps pendant lequel aucune donnée n'est transmise au travers du pseudo-lien. La durée de veille maximale autorisée pour un pseudo-lien est l'intervalle de temps au-delà duquel, si aucune donnée n'est transmise au travers du pseudo-lien, celui-ci est détruit libérant ainsi des ressources.

Selon une caractéristique particulière du procédé de communication objet de l'invention, la demande d'établissement du pseudo-lien comprend un paramètre d'identification du deuxième équipement de terminaison, le paramètre d'identification du troisième équipement de terminaison, un paramètre indiquant qu'il s'agit d'une demande d'établissement du troisième pseudo-lien et un paramètre d'identification d'un réseau virtuel auquel le premier et le deuxième équipement client appartiennent.

La décision d'établir un pseudo-lien étant prise par le premier équipement de terminaison qui ne constitue pas une extrémité du pseudo-lien à établir, l'équipement de terminaison destiné à établir le pseudo-lien reçoit ainsi les informations nécessaires à l'établissement du pseudo-lien.

Selon une caractéristique particulière du procédé de communication objet de l'invention, la demande d'établissement du troisième pseudo-lien comprend en outre un paramètre d'identification du premier équipement client et un paramètre d'identification du deuxième équipement client.

Ces informations permettent d'identifier de manière unique les différents équipements client connectés à un même équipement de terminaison. En effet, en l'absence de tels paramètres, c'est-à-dire lorsque l'identifiant de l'équipement client destinataire est inconnu dans la table MAC du deuxième équipement de terminaison, le deuxième équipement de terminaison transmet, conformément au document RFC 4762, les trames de données émises par le premier équipement client à destination du deuxième équipement client sur l'ensemble des pseudo-liens dont le premier équipement de terminaison constitue une extrémité. On évite ainsi une telle transmission à destination d'équipements client non concernés.

Selon une caractéristique particulière du procédé de communication objet de l'invention, celui-ci comprend une étape de réception d'un message de confirmation de l'établissement du troisième pseudo-lien émis par le deuxième équipement de terminaison.

A réception de cette information, le premier équipement de terminaison termine la transmission des données destinées au deuxième équipement client par le deuxième pseudo-lien.

Selon une caractéristique particulière du procédé de communication objet de l'invention, celui-ci comprend une étape d'émission, à destination du deuxième équipement de terminaison, d'une demande de suppression du troisième pseudo-lien.

Afin d'économiser les ressources de transmission, le premier équipement de terminaison commande la destruction du troisième pseudo-lien une fois la transmission des données terminée.

L'invention concerne également un procédé d'établissement d'un pseudo-lien destiné à transmettre des données entre un premier équipement client et un deuxième équipement client, un premier pseudo-lien étant établi entre un premier équipement de terminaison (PE2) et un deuxième équipement de terminaison (PE1) auquel le premier équipement client est connecté, un deuxième pseudo-lien étant établi entre le premier équipement de terminaison (PE2) et un troisième équipement de terminaison (PE3) auquel le deuxième équipement client est connecté le procédé comprenant les étapes suivantes mises en oeuvre par le deuxième équipement de terminaison :
- réception d'une demande d'établissement d'un pseudo-lien entre le deuxième équipement de terminaison et le troisième équipement de terminaison, la demande de transmission comprenant, un paramètre d'identification du deuxième équipement de terminaison, le paramètre d'identification du troisième équipement de terminaison, un paramètre indiquant qu'il s'agit d'une demande d'établissement du troisième pseudo-lien et un paramètre d'identification d'un réseau virtuel auquel le premier et le deuxième équipement client appartiennent, la demande d'établissement étant émise par le premier équipement de terminaison,
- émission, à destination du troisième équipement de terminaison, d'un message d'établissement du pseudo-lien.

Selon une caractéristique particulière du procédé d'établissement d'un pseudo-lien objet de l'invention, celui-ci comprend une étape d'émission, à destination du premier équipement de terminaison, d'un message de confirmation de l'établissement du pseudo-lien émis par le deuxième équipement de terminaison.

Selon une caractéristique particulière du procédé d'établissement d'un pseudo-lien objet de l'invention, celui-ci comprend une étape d'émission, à destination du premier équipement de terminaison, d'un message de confirmation de la suppression du pseudo-lien émis par le deuxième équipement de terminaison.

L'invention a également pour objet un équipement de terminaison (PE2) apte à communiquer avec au moins un deuxième et un troisième équipement de terminaison (PE1, PE3) appartenant à un réseau de commutation de paquets, un premier pseudo-lien (pw1) étant établi entre ledit équipement de terminaison et le deuxième équipement de terminaison, et un deuxième pseudo-lien (pw2) étant établi entre ledit équipement de terminaison et le troisième équipement de terminaison, l'équipement de terminaison comprenant :
- des moyens d'interception d'une trame de données émise par un premier équipement client connecté au deuxième équipement de terminaison à destination d'un deuxième équipement client, la trame de données comprenant un identifiant du premier équipement client et un identifiant du deuxième équipement client,
- des moyens de détermination d'un paramètre d'identification du deuxième équipement de terminaison auquel est connecté le premier équipement client à partir de l'identifiant du premier équipement client,
- des moyens de détermination d'un paramètre d'identification du troisième équipement de terminaison auquel est connecté le deuxième équipement client à partir de l'identifiant du deuxième équipement client,
- des moyens d'émission, à destination du deuxième équipement de terminaison, d'une demande d'établissement d'un troisième pseudo-lien entre le deuxième équipement de terminaison et le troisième équipement de terminaison au travers duquel les données émises par le premier équipement client sont destinées à être transmises.

L'invention concerne encore un équipement de terminaison destiné à constituer une extrémité d'un premier pseudo-lien destiné à transmettre des données entre un premier équipement client et un deuxième équipement client, le premier équipement client étant connecté à l'équipement de terminaison, un deuxième pseudo-lien étant établi entre un premier équipement de terminaison (PE2) et un deuxième équipement de terminaison (PE3) auquel le deuxième équipement client est connecté, le premier équipement de terminaison constituant une deuxième extrémité du premier pseudo-lien, l' équipement de terminaison comprenant :
- des moyens de réception d'une demande d'établissement d'un pseudo-lien entre l'équipement de terminaison et le deuxième équipement de terminaison, la demande de transmission comprenant, un paramètre d'identification de l'équipement de terminaison, le paramètre d'identification du deuxième équipement de terminaison, un paramètre indiquant qu'il s'agit d'une demande d'établissement du troisième pseudo-lien et un paramètre d'identification d'un réseau virtuel auquel le premier et le deuxième équipement client appartiennent, la demande d'établissement étant émise par le premier équipement de terminaison,
- émission, à destination du troisième équipement de terminaison, d'un message d'établissement du pseudo-lien.

Selon d'autres aspects, l'invention concerne également des programmes d'ordinateur comprenant des instructions de code de programme pour la mise en oeuvre des étapes des procédés de communication et d'établissement d'un pseudo-lien décrits précédemment, lorsque ces programmes sont exécutés par un ordinateur.

Chacun des programmes d'ordinateur décrits ci-dessus peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'enregistrement lisible par un ordinateur sur lequel est enregistré un programme d'ordinateur tel que décrit précédemment.

Le support d'informations peut être n'importe quelle entité ou dispositif capable de stocker le programme. Par exemple, le support peut comporter un moyen de stockage, tel qu'une ROM (pour *"Read Only Memory"*), par exemple un CD ROM ou une ROM de circuit microélectronique, ou encore un moyen d'enregistrement magnétique, par exemple une disquette (*floppy disc*) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

D'autres caractéristiques et avantages apparaîtront à la lecture de modes de réalisation décrits en référence aux dessins dans lesquels :
- la figure 1 représente un réseau d'accès conforme à l'architecture dite Hub and Spoke dans lequel l'invention est mise en oeuvre,
- la figure 2 représente les différentes étapes du procédé de communication mis en oeuvre par le deuxième équipement de terminaison ou équipement maître,
- les figures 3A à 3D représentent les différents messages échangés entre l'équipement de terminaison maître et les équipements de terminaison esclave lors de la mise en oeuvre des procédés de communication et d'établissement d'un pseudo-lien,
- la figure 4 représente les différentes étapes du procédé d'établissement d'un pseudo-lien mis en oeuvre par les équipements de terminaison esclaves,
- la figure 5 représente un équipement de terminaison destiné à remplir les fonctions d'un équipement de terminaison maître,
- la figure 6 représente un équipement de terminaison destiné à remplir les fonctions d'un équipement de terminaison esclave.

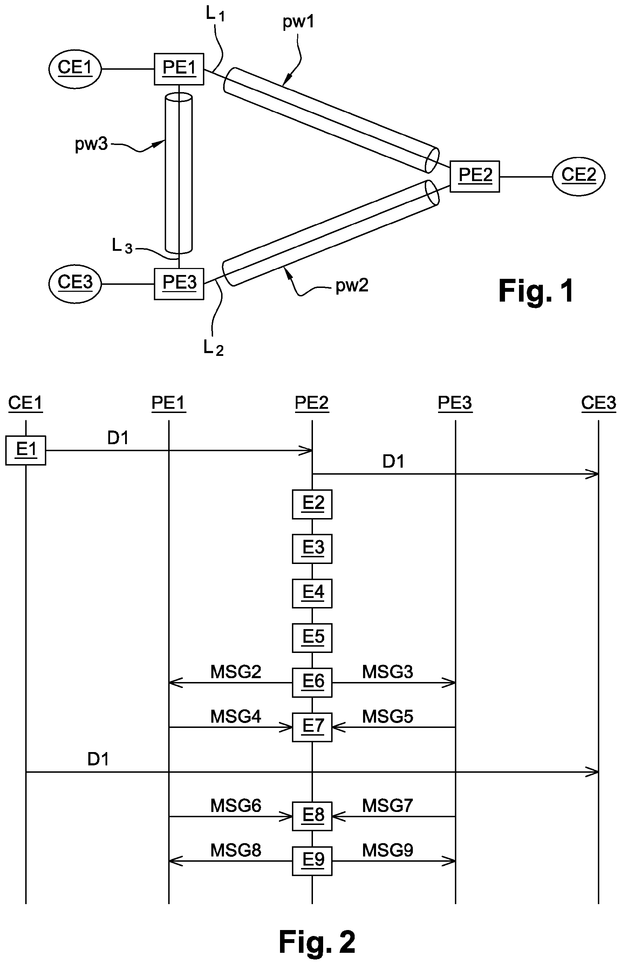

La **figure 1** représente un réseau d'accès radio R dans lequel les procédés de communication et d'établissement objets de l'invention sont mis en oeuvre.

Un tel réseau d'accès mobile R comprend une pluralité d'équipements de terminaison PEᵢ, i ∈ {1, 3} connectés entre eux au moyen de liens filaires tels que des paires de cuivre, ou une section de fibre optique. De tels équipements de terminaison PEᵢ sont par exemple des routeurs.

Ainsi, un premier équipement de terminaison PE₁ est connecté par un premier lien L1 à un deuxième équipement de terminaison PE₂. L'équipement de terminaison PE₂ est connecté à un troisième équipement de terminaison PE₃ au moyen d'un lien L2. Enfin, l'équipement de terminaison PE₃ est connecté, au moyen d'un lien L3, au premier équipement de terminaison PE₁.

Un tel réseau est un réseau de type « hub and spoke ». Le terme « hub and spoke » ou en étoile désigne une architecture de réseau dans laquelle on prévoit un équipement auquel tous les autres équipements du réseau sont connectés Un tel équipement est dit équipement maître. Les autres équipements du réseau sont appelés équipements esclaves. L'équipement maître constitue un point de connexion central par lequel transitent tous les flux de données relatifs aux différentes communications établies entre les différents équipements du réseau reliés à l'équipement. Dans le réseau R, l'équipement de terminaison PE2 est l'équipement maître. Les équipements de terminaison PE2 et PE3 sont des équipements esclaves.

Un premier équipement client CE1, tel que par exemple une station de base, est connecté au premier équipement de terminaison PE₁.

Un deuxième équipement client CE2, tel qu'une passerelle de rattachement S-GW (Serving Gateway) ou une entité de gestion de mobilité MME (*Mobility Management Entity*), est connecté au deuxième équipement de terminaison PE2.

Un troisième équipement client CE3 est connecté au troisième équipement de terminaison PE₃. Un tel équipement client CE3 est par exemple une station de base.

Dans la suite de la description, l'invention est décrite pour une pluralité de réseaux IP connectés entre eux au moyen du service VPLS au sein d'un même domaine VPLS. L'ensemble de ces réseaux constituant le domaine VPLS (tel que décrit dans le document RFC 4762) correspond par exemple à des sites d'une même entreprise éloignés les uns des autres de sorte à former une architecture multipoint-à-multipoint.

En référence à la **figure 2**, le premier équipement client CE1 transmet des trames de données D1 à destination du troisième équipement client CE3 au cours d'une étape E1. Les trames de données D1 sont transmises au travers d'un pseudo-lien pw1 préalablement établi entre le premier équipement de terminaison PE1 et le deuxième équipement de terminaison PE2 puis au travers d'un pseudo-lien pw2 préalablement établi entre le deuxième équipement de terminaison PE2 et le troisième équipement de terminaison PE3. Le premier pseudo-lien pw1 est porté par un chemin sous-jacent constitué de la liaison L1. Le deuxième pseudo-lien pw2 est porté par un chemin sous-jacent constitué de la liaison L2.

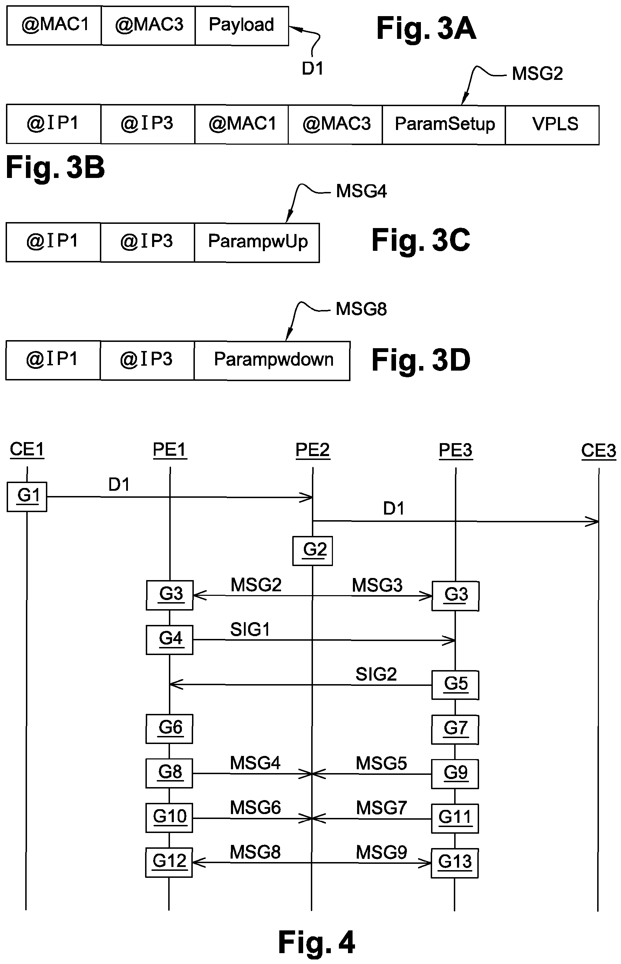

Une telle trame de données D1, représentée à la **figure 3A**, comporte un identifiant du premier équipement client CE1 tel que son adresse MAC @MAC1, et un identifiant du troisième équipement client CE3, tel que son adresse MAC @MAC3, ainsi que les données utiles Payload. Une adresse MAC est une adresse utilisée pour identifier un équipement de communication au niveau de la couche liaison de données telle que définie dans le modèle OSI (*Open Systems Interconnection,* ou interconnexion de systèmes ouverts en français) défini par l'ISO (Organisation Internationale de Normalisation).

Au cours d'une étape E2, le deuxième équipement de terminaison PE2 intercepte une trame de données D1. Au cours d'une étape E3, le deuxième équipement de terminaison PE2 détermine l'identifiant @MAC3 de l'équipement client CE3 destinataire des trames de données D1, et l'identifiant @MAC1 de l'équipement client CE1 émetteur des trames de données D1

Le deuxième équipement de terminaison PE2 interroge alors au cours d'une étape E4, une table d'adresses MAC (pour *Medium Access Control*) T_{MAC2} ou table VSI (*Virtual Switching Instance*) comprenant les adresses MAC @MAC des équipements clients CE pour lesquels le deuxième équipement de terminaison PE2 a déjà intercepté des trames de données.

Une telle table d'adresses MAC T_{MAC2} est complétée lors de la transmission de trames de données entre différents équipements clients CE au travers des pseudo-liens pw1, pw2 tel quel défini dans le document RFC 4762. En effet, le deuxième équipement de terminaison étant l'équipement de terminaison maitre, toutes les trames de données transmises entre les différents équipements clients d'un même domaine VPLS sont transmises au travers de l'équipement de terminaison maître PE2. Ainsi, lors de la première communication de trames de données entre l'équipement client CE1 et un autre équipement client tel que l'équipement client CE2, au travers du premier pseudo-lien pw1, la table d'adresses MAC T_{MAC2} du deuxième équipement de terminaison est complétée avec un identifiant pw1 du premier pseudo-lien pw1 au travers duquel le deuxième équipement de terminaison sait qu'il peut transmettre des trames de données à destination de l'équipement client CE1. En effet, un pseudo-lien peut être considéré comme une interface logique entre deux tables MAC de deux équipements de terminaison. Il est ici souligné que l'identifiant du domaine VPLS peut être réutilisé en tant que FEC, identifiant de pw3 tel que défini dans le document RFC 4762.

Connaissant l'identifiant pw1 du pseudo-lien pw1, le deuxième équipement de terminaison PE2 détermine au cours d'une étape E5 un identifiant du premier équipement de terminaison PE1 auquel l'équipement client CE1 est connecté tel que son adresse IP @IP1. Une telle adresse IP @IP1 du premier équipement de terminaison PE1 est par exemple mémorisée dans une table de routage du deuxième équipement de terminaison PE2.

Il est de même lors de la première communication de trames de données entre le troisième équipement client CE3 et le deuxième équipement client CE2, au travers du deuxième pseudo-lien pw2, la table d'adresses MAC T_{MAC2} du deuxième équipement de terminaison est complétée avec un identifiant pw2 du deuxième pseudo-lien pw2 au travers duquel le deuxième équipement de terminaison sait qu'il peut transmettre des trames de données à destination de l'équipement client CE2.

De même, lors de la première communication de trames de données entre l'équipement client CE1 et l'équipement client CE2, la table d'adresses MAC T_{MAC1} du premier équipement de terminaison PE1 est également complétée avec un identifiant @MAC2 du deuxième équipement client CE2 et l'identifiant pw1 du pseudo-lien pw1.

Lors de la première communication de trames de données entre l'équipement client CE3 et l'équipement client CE2, la table d'adresses MAC T_{MAC3} du troisième équipement de terminaison PE3 est, elle aussi, complétée avec un identifiant @MAC2 du deuxième équipement client CE2 et l'identifiant pw2 du pseudo-lien pw2.

Au cours d'une étape E6, le deuxième équipement PE2 émet à destination du premier équipement PE1 une demande d'établissement MSG2 d'un troisième pseudo-lien pw3 entre le premier équipement de terminaison PE1 et le troisième équipement de terminaison PE3 au travers duquel les trames de données D1 émises par le premier équipement client CE1 à destination du troisième équipement client CE3 sont destinées à être transmises. Le pseudo-lien pw3 est porté par un chemin sous-jacent constitué de la liaison L3. Une telle demande d'établissement d'un pseudo-lien est émise au niveau du plan de commande MPLS tel que défini dans le document RFC4447. Il s'agit par exemple d'un message LDP Notification.

Une telle demande d'établissement d'un pseudo-lien pw3, représentée à la **figure 3B**, comprend l'identifiant @IP1 du premier équipement de terminaison PE1, l'identifiant @IP3 du troisième équipement de terminaison PE3, l'adresse MAC @MAC1 du premier équipement de client CE1 et l'adresse MAC @MAC3 de l'équipement client CE3, permettant, le cas échéant, de compléter la table MAC T_{MAC1} du premier équipement de terminaison PE1, un paramètre ParamSetUp indiquant que la demande MSG2 est une demande d'établissement d'un pseudo-lien et enfin l'identifiant VPLS du domaine VPLS auquel appartiennent les équipements de client CE1 et CE3. En complétant la table MAC T_{MAC1} lors de l'établissement du pseudo-lien pw3, on évite que le premier équipement de terminaison PE1 ne transmette les trames de données émises par le premier équipement client CE1 à destination du troisième équipement client CE3 sur tous les pseudo-liens dont l'équipement de terminaison PE2 constitue une extrémité.

Toujours au cours de l'étape E6, le deuxième équipement PE2 émet à destination du troisième équipement PE3 une demande d'établissement MSG3 du troisième pseudo-lien pw3. Une telle demande d'établissement MSG3 d'un pseudo-lien pw3 comprend l'identifiant @IP1 du premier équipement de terminaison PE1, l'identifiant @IP3 du troisième équipement de terminaison PE3, l'adresse MAC @MAC1 du premier équipement de client CE1 et l'adresse MAC @MAC3 du troisième équipement client CE3, permettant, le cas échéant, de compléter la table MAC T_{MAC3} du troisième équipement de terminaison PE3, le paramètre ParamSetUp indiquant que la demande MSG3 est une demande d'établissement d'un pseudo-lien et enfin l'identifiant VPLS du domaine VPLS auquel appartiennent les équipements client CE1 et CE3.

La communication entre les équipements de terminaison PE1 et PE3 étant bidirectionnelle, l'équipement de terminaison PE2 émet une demande d'établissement du pseudo-lien pw3 à destination des deux équipements de terminaison PE1 et PE3 constituant les deux extrémités du pseudo-lien pw3.

Dans un premier mode de réalisation, les demandes d'établissement MSG2 et MSG3 du pseudo-lien pw3 comprennent un paramètre supplémentaire ParamATime, indiquant une durée de veille maximale autorisée pour un pseudo-lien. La durée de veille maximale autorisée pour un pseudo-lien est l'intervalle de temps au-delà duquel, si aucune trame de données n'est transmise au travers du pseudo-lien, celui-ci est détruit libérant ainsi des ressources.

Une fois cette durée écoulée, le pseudo-lien pw3 est détruit libérant ainsi des ressources pour une autre communication.

Au cours d'une étape E7, le deuxième équipement de terminaison PE2 reçoit un message MSG4 émis par le premier équipement de terminaison PE1 l'informant que le pseudo-lien pw3 est établi entre le premier équipement de terminaison PE1 et le troisième équipement de terminaison PE3. Le deuxième équipement PE2 reçoit également au cours de l'étape E7, un message MSG5 l'informant que le pseudo-lien pw3 est établi entre le troisième équipement de terminaison PE3 et le premier équipement de terminaison PE1. Les messages MSG4 et MSG5 sont par exemple des messages de type LDP Notification tels que définis dans le document de l'IETF référencé RFC5036. De tels messages, représentés à la **figure 3C**, comprennent, en plus des identifiants @IP1 et @IP3 des équipements de terminaison PE1 et PE3, l'identifiant VPLS du domaine VPLS auquel appartiennent les équipements client CE1 et CE3 et un paramètre ParampwUp indiquant que le pseudo-lien pw3 a été établi ainsi que les identifiants du premier et du troisième équipement de terminaison PE1 et PE3.

Dans le premier mode de réalisation, une fois la durée de veille maximale autorisée pour le pseudo-lien pw3 indiquée par le ParamATime écoulée, le deuxième équipement de terminaison PE2 reçoit au cours d'une étape E8, un message de notification MSG6 indiquant que le pseudo-lien pw3, établi entre le premier équipement de terminaison PE1 et le troisième équipement de terminaison PE3, a été détruit.

Toujours au cours de l'étape E8, le deuxième équipement de terminaison PE2 reçoit un message de notification MSG7 indiquant que le pseudo-lien pw3, établi entre le troisième équipement de terminaison PE3 et le premier équipement de terminaison PE1, a été détruit.

Les messages MSG6 et MSG7 sont par exemple des messages de type LDP Notification comprenant un paramètre ParampwDown indiquant que le pseudo-lien pw3 a été détruit, ainsi que les identifiants @IP1 et @IP3 du premier et du troisième équipement de terminaison PE1 et PE3 et l'identifiant VPLS du domaine VPLS auquel appartiennent les équipements client CE1 et CE3.

Dans un deuxième mode de réalisation, le deuxième équipement de terminaison PE2 émet à destination du premier équipement de terminaison PE1, au cours d'une étape E9, un message MSG8 demandant la destruction du pseudo-lien pw3 établi entre le premier équipement de terminaison PE1 et le troisième équipement de terminaison PE3 pour un premier sens de transmission des trames de données D1. Toujours au cours de l'étape E9, le deuxième équipement de terminaison PE2 émet à destination du troisième équipement de terminaison PE3 un message MSG9 demandant la destruction du pseudo-lien pw3 établi entre le troisième équipement de terminaison PE3 et le premier équipement de terminaison PE1 pour un deuxième sens de transmission des trames de données D1. Les messages MSG8 et MSG9 sont par exemple des messages de type LDP Notification. De tels messages, représentés à la **figure 3D**, comprennent, en plus des identifiants @IP1 et @IP3 des équipements de terminaison PE1 et PE3, l'identifiant VPLS du domaine VPLS auquel appartiennent les équipements client CE1 et CE3 et un paramètre ParampwDown indiquant que le pseudo-lien pw3 a été détruit ainsi que les identifiants du premier et du troisième équipement de terminaison PE1 et PE3.

En référence à la **figure 4**, le premier équipement client CE1 transmet des trames de données D1 à destination du troisième équipement client CE3 au cours d'une étape G1. Les trames de données D1 émises par l'équipement client CE1 sont interceptées par le deuxième équipement de terminaison PE2 car celui-ci est l'équipement maître.

Au cours d'une étape G2, le deuxième équipement de terminaison PE2 interroge la table d'adresses MAC T_{MAC2} afin de déterminer, au moyen de l'adresse MAC @MAC1 de l'équipement client CE1, et de l'adresse MAC @MAC3 de l'équipement client CE3, parmi l'ensemble d'équipements de terminaison PE1, PE3 qui lui sont connectés, ou équipements de terminaison esclaves, celui auquel le premier équipement client CE1 émetteur des trames de données D1 est connecté et celui auquel le troisième équipement client CE3 destinataire des données émises par le premier équipement client CE1 est connecté.

Une fois les équipements de terminaison PE1 et PE3 identifiés, le deuxième équipement de terminaison PE2 émet à destination du premier équipement de terminaison PE1 et à destination du troisième équipement de terminaison PE3 une demande d'établissement d'un pseudo-lien car la communication entre les équipements de terminaison PE1 et PE3 est bidirectionnelle.

Le premier équipement de terminaison PE1 reçoit au cours d'une étape G3 une demande d'établissement MSG2 d'un troisième pseudo-lien pw3 entre le premier équipement de terminaison PE1 et le troisième équipement de terminaison PE3 au travers duquel les données émises par le premier équipement client CE1 sont destinées à être transmises. Le pseudo-lien pw3 est porté par un chemin sous-jacent constitué de la liaison L3.

Une telle demande d'établissement d'un pseudo-lien pw3 comprend l'identifiant @IP1 du premier équipement de terminaison PE1, l'identifiant @IP3 du troisième équipement de terminaison PE3, l'adresse MAC @MAC1 du premier équipement de client CE1 et l'adresse MAC @MAC3 de l'équipement client CE3, permettant, le cas échéant, de compléter la table MAC T_{MAC1} du premier équipement de terminaison PE1, le paramètre ParamSetUp indiquant que la demande MSG2 est une demande d'établissement d'un pseudo-lien et enfin l'identifiant VPLS du domaine VPLS auquel appartiennent les équipements client CE1 et CE3.

Au cours de l'étape G3, le troisième équipement de terminaison PE3 reçoit une demande d'établissement MSG3 du troisième pseudo-lien pw3 émise par le deuxième équipement de terminaison PE2 au travers du deuxième pseudo-lien pw2. Une telle demande d'établissement MSG3 d'un pseudo-lien pw3 comprend l'identifiant @IP1 du premier équipement de terminaison PE1, l'identifiant @IP3 du troisième équipement de terminaison PE3, l'adresse MAC @MAC1 du premier équipement de client CE1 et l'adresse MAC @MAC3 de l'équipement client CE3, permettant, le cas échéant, de compléter la table MAC T_{MAC3} du troisième équipement de terminaison PE3, le paramètre ParamSetUp indiquant que la demande MSG3 est une demande d'établissement d'un pseudo-lien et enfin l'identifiant VPLS du domaine VPLS auquel appartiennent les équipements client CE1 et CE3.

Dans un premier mode de réalisation, les demandes d'établissement MSG2 et MSG3 du pseudo-lien pw3 comprennent un paramètre supplémentaire ParamATime indiquant une durée de veille maximale autorisée pour un pseudo-lien. La durée de veille maximale autorisée pour un pseudo-lien est l'intervalle de temps au-delà duquel, si aucune trame de données n'est transmise au travers du pseudo-lien, celui-ci est détruit libérant ainsi des ressources.

L'établissement du pseudo-lien pw3 repose, par exemple, sur l'échange de demandes d'établissement conformes au protocole T-LDP (*Label Distribution Protocol,* ou protocole de distribution d'étiquette en français) défini dans le document de l'IETF référencé RFC 4447.

Ainsi pour un premier sens de transmission, un premier message d'établissement SIG1 du pseudo-lien pw3 est émis par le premier équipement de terminaison PE1 à destination du troisième équipement de terminaison PE3 au cours d'une étape G4. Cette première demande d'établissement SIG1 comporte notamment l'identifiant VPLS du domaine VPLS auquel appartiennent le premier et le troisième équipement client CE1, CE3. La demande d'établissement SIG1 comporte également une étiquette Ibl1 destinée à être associée en entête des tramess de données D1 émises par le troisième équipement de terminaison PE3 à destination du premier équipement de terminaison PE1 au travers du pseudo-lien pw3.

Au cours d'une étape G5, pouvant être concomitante avec l'étape G4, le troisième équipement de terminaison PE3 émet un deuxième message d'établissement SIG2 du pseudo-lien pw3 à destination du premier équipement de terminaison au cours d'une étape G5. Cette deuxième demande d'établissement SIG2 comporte notamment l'identifiant VPLS du domaine VPLS auquel appartiennent le premier et le troisième équipement client CE1, CE3. La demande d'établissement SIG2 comporte également une étiquette Ibl2 destinée à être associée en entête des trames de données émises par le premier équipement de terminaison PE1 à destination du troisième équipement de terminaison PE3 au travers du pseudo-lien pw3.

Une fois le pseudo-lien pw3 établi, le premier équipement de terminaison PE1 supprime de sa table d'adresses MAC T_{MAC1} l'identifiant de l'équipement client @MAC3 associé à l'identifiant pw1 du pseudo-lien pw1 comme interface logique de sortie pour associer désormais l'identifiant de l'équipement client @MAC3 à l'identifiant pw3 du pseudo-lien pw3 au cours d'une étape G6. De même, le troisième équipement de terminaison PE3 supprime de sa table d'adresses MAC T_{MAC3} l'identifiant @MAC1 de l'équipement client MAC1 associé à l'identifiant pw1 du pseudo-lien pw1 comme interface logique de sortie pour associer désormais l'identifiant @MAC1 de l'équipement client MAC1 à l'identifiant pw3 du pseudo-lien pw3 au cours d'une étape G7. Ainsi, les trames de données D1 émises par l'équipement client CE1 à destination de l'équipement client CE3 sont transmises au travers du pseudo-lien pw3. Il est de même pour les trames de données D1 émises par l'équipement client CE3 à destination de l'équipement client CE1 sont transmises au travers du pseudo-lien pw3.

En effet, une fois les tables MAC T_{MAC1} et T_{MAC3} des équipements de terminaison PE1 et PE3 mises à jour, le premier équipement de terminaison PE1 n'émet plus de demande de transmission de données à destination du deuxième équipement de terminaison PE2. En effet, par simple consultation de sa table d'adresses MAC T_{MAC1} il sait que les trames de données D1 émises à destination de l'équipement client CE3 sont destinées à être transmises au travers du pseudo-lien pw3 et non au travers successivement des pseudo-liens pw1 et pw2 comme cela est le cas dans les solutions existantes.

Au cours d'une étape G8, le premier équipement de terminaison PE1 émet un message MSG4 à destination du deuxième équipement de terminaison PE2 l'informant que le pseudo-lien pw3 est établi entre le premier équipement de terminaison PE1 et le troisième équipement de terminaison PE3 pour un premier sens de transmission. Le troisième équipement PE3 émet également au cours de l'étape G9, un message MSG5 l'informant que le pseudo-lien pw3 est établi entre le troisième équipement de terminaison PE3 et le premier équipement de terminaison PE1 pour un deuxième sens de transmission.

Dans le premier mode de réalisation, une fois la durée de veille maximale autorisée pour un pseudo-lien indiquée par le paramètre ParamATime écoulée, le premier équipement de terminaison PE1 émet à destination du deuxième équipement de terminaison PE2 au cours d'une étape G10, un message de notification MSG6 indiquant que le pseudo-lien pw3, établi entre le premier équipement de terminaison PE1 et le troisième équipement de terminaison PE3, a été détruit pour un premier sens de transmission.

Au cours d'une étape G11, le troisième équipement de terminaison PE3 émet à destination du deuxième équipement de terminaison PE2 un message de notification MSG7 indiquant que le pseudo-lien pw3, établi entre le troisième équipement de terminaison PE3 et le premier équipement de terminaison PE1, a été détruit pour un deuxième sens de transmission.

Dans le deuxième mode de réalisation, le premier équipement de terminaison PE1 reçoit, au cours d'une étape G12, un message MSG8 demandant la destruction du pseudo-lien pw3 établi entre le premier équipement de terminaison PE1 et le troisième équipement de terminaison PE3 pour un premier sens de transmission. Le troisième équipement de terminaison PE3 reçoit également un message MSG9, identique au message MSG8 reçu par le premier équipement de terminaison PE1, en provenance du deuxième équipement de terminaison PE2 au cours G13.

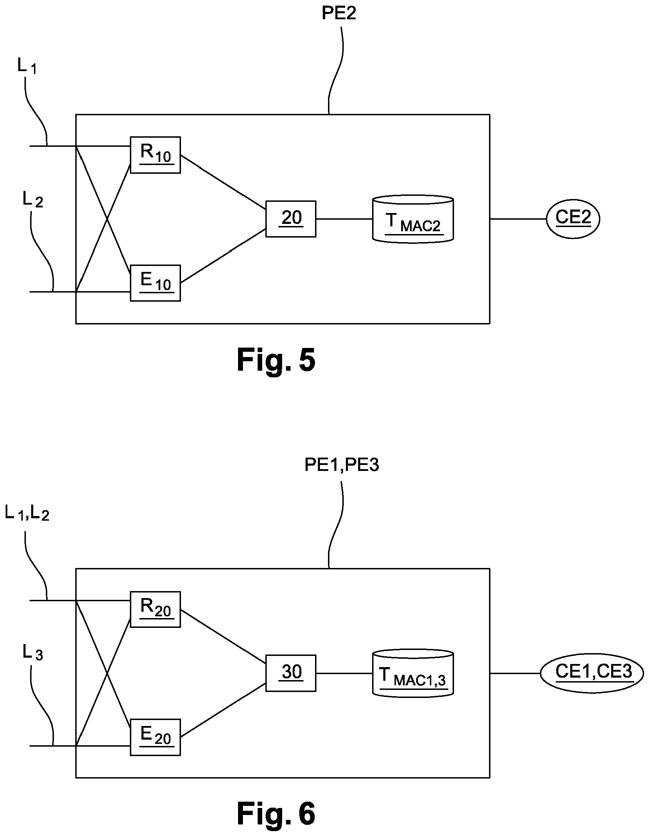

La **figure 5** représente un équipement de terminaison destiné à remplir les fonctions d'un équipement de terminaison maître, tel que le deuxième équipement de terminaison PE2.

Un tel équipement de terminaison PE2 comprend des moyens de réception R₁₀ connectés aux liaisons L1 et L2. De tels moyens de réception sont aptes à recevoir des trames de données D1, un message MSG4, MSG5 informant le deuxième équipement de terminaison PE2 qu'un pseudo-lien pw3 a été établi entre le premier et le troisième équipement de terminaison PE1 et PE3 ou encore un message MSG6, MSG7 informant le deuxième équipement de terminaison PE2 que le pseudo-lien pw3 établi entre le premier et le troisième équipement de terminaison PE1 et PE3 a été détruit. Enfin, les moyens de réception R₁₀ sont également aptes à recevoir des trames de données émises par un équipement client CEi, par exemple.

Les moyens de réception R₁₀ sont également connectés à des moyens d'interrogation 20 d'une table d'adresses MAC T_{MAC2} comprenant les adresses MAC des différents équipements de terminaison PE1, PE3 connectés au deuxième équipement de terminaison PE2.

Les moyens d'interrogation 20 sont également connectés à des moyens d'émission E₁₀. les moyens d'émission E₁₀ sont aptes à émettre une demande de transmission de données MSG1, un message MSG2, MSG3 demandant qu'un pseudo-lien pw3 soit établi entre le premier et le troisième équipement de terminaison PE1 et PE3 ou encore un message MSG8, MSG9 informant le premier et le troisième équipement de terminaison PE1, PE3 que le pseudo-lien pw3 établi entre le premier et le troisième équipement de terminaison PE1 et PE3 doit être détruit. Enfin, les moyens d'émission E₁₀ sont également aptes à émettre des données émises par un équipement client CEi, par exemple. Les moyens d'émission E₁₀ sont connectés à la première liaison L1 et à la deuxième liaison L2.

La **figure 6** représente un équipement de terminaison destiné à remplir les fonctions d'un équipement de terminaison esclave, tel que le premier et le troisième équipement de terminaison PE1, PE3.

Un tel équipement de terminaison PE1, PE3 comprend des moyens d'émission E₂₀ connectés aux liaisons L1, L2 et L3, et sont aptes à émettre une demande de transmission de données MSG1, un message MSG4, MSG5 informant le deuxième équipement de terminaison PE2 qu'un pseudo-lien pw3 a été établi entre le premier et le troisième équipement de terminaison PE1 et PE3 ou encore un message MSG6, MSG7 informant le deuxième équipement de terminaison PE2 que le pseudo-lien pw3 établi entre le premier et le troisième équipement de terminaison PE1 et PE3 a été détruit. Enfin, les moyens d'émission E₂₀ sont également aptes à recevoir des données émises par un équipement client CEi, par exemple.

Les moyens d'émission E₂₀ sont également connectés à des moyens d'interrogation 30 d'une table d'adresses MAC T_{MAC1}, T_{MAC3} comprenant les adresses MAC des différents équipements de terminaison PE2 connectés au premier et au troisième équipement de terminaison PE1, PE3.

Les moyens d'interrogation 30 sont également connectés à des moyens de réception R₂₀. Les moyens de réception R₂₀ sont aptes à recevoir un message MSG2, MSG3 demandant qu'un pseudo-lien pw3 soit établi entre le premier et le troisième équipement de terminaison PE1 et PE3 ou encore un message MSG8, MSG9 informant le premier et le troisième équipement de terminaison PE1, PE3 que le pseudo-lien pw3 établi entre le premier et le troisième équipement de terminaison PE1 et PE3 doit être détruit. Enfin, les moyens de réception R₂₀ sont également aptes à recevoir des données émises par un équipement client CEi, par exemple.

## Revendications

1. Procédé de communication entre un premier équipement de terminaison (PE2) et au moins un deuxième et un troisième équipement de terminaison (PE1, PE3) appartenant à un réseau de commutation de paquets, un premier pseudo-lien (pw1) étant établi entre le premier et le deuxième équipement de terminaison, et un deuxième pseudo-lien (pw2) étant établi entre le premier et le troisième équipement de terminaison, le procédé comprenant les étapes suivantes mises en oeuvre par le premier équipement de terminaison :
- interception d'une trame de données émise par un premier équipement client connecté au deuxième équipement de terminaison à destination d'un deuxième équipement client, la trame de données comprenant un identifiant du premier équipement client et un identifiant du deuxième équipement client,
- détermination d'un paramètre d'identification du deuxième équipement de terminaison auquel est connecté le premier équipement client à partir de l'identifiant du premier équipement client,
- détermination d'un paramètre d'identification du troisième équipement de terminaison auquel est connecté le deuxième équipement client à partir de l'identifiant du deuxième équipement client,
- émission, à destination du deuxième équipement de terminaison, d'une demande d'établissement d'un troisième pseudo-lien entre le deuxième équipement de terminaison et le troisième équipement de terminaison au travers duquel les données émises par le premier équipement client sont destinées à être transmises.

2. Procédé de communication selon la revendication 1 dans lequel la demande d'établissement du troisième pseudo-lien comprend un paramètre représentatif de la durée de veille maximale autorisée pour le troisième pseudo-lien.

3. Procédé de communication selon la revendication 2 dans lequel la demande d'établissement du pseudo-lien comprend un paramètre d'identification du deuxième équipement de terminaison, le paramètre d'identification du troisième équipement de terminaison, un paramètre indiquant qu'il s'agit d'une demande d'établissement du troisième pseudo-lien et un paramètre d'identification d'un réseau virtuel auquel le premier et le deuxième équipement client appartiennent.

4. Procédé de communication selon la revendication 3 dans lequel, la demande d'établissement du troisième pseudo-lien comprend en outre un paramètre d'identification du premier équipement client et un paramètre d'identification du deuxième équipement client.

5. Procédé de communication selon la revendication 1 comprenant une étape de réception d'un message de confirmation de l'établissement du troisième pseudo-lien émis par le deuxième équipement de terminaison.

6. Procédé de communication selon la revendication 1 comprenant une étape d'émission, à destination du deuxième équipement de terminaison, d'une demande de suppression du troisième pseudo-lien.

7. Equipement de terminaison (PE2) apte à communiquer avec au moins un deuxième et un troisième équipement de terminaison (PE1, PE3) appartenant à un réseau de commutation de paquets, un premier pseudo-lien (pw1) étant établi entre ledit équipement de terminaison et le deuxième équipement de terminaison, et un deuxième pseudo-lien (pw2) étant établi entre le dit équipement de terminaison et le troisième équipement de terminaison, l'équipement de terminaison comprenant :
- des moyens d'interception d'une trame de données émise par un premier équipement client connecté au deuxième équipement de terminaison à destination d'un deuxième équipement client, la trame de données comprenant un identifiant du premier équipement client et un identifiant du deuxième équipement client,
- des moyens de détermination d'un paramètre d'identification du deuxième équipement de terminaison auquel est connecté le premier équipement client à partir de l'identifiant du premier équipement client,
- des moyens de détermination d'un paramètre d'identification du troisième équipement de terminaison auquel est connecté le deuxième équipement client à partir de l'identifiant du deuxième équipement client,
- des moyens d'émission, à destination du deuxième équipement de terminaison, d'une demande d'établissement d'un troisième pseudo-lien entre le deuxième équipement de terminaison et le troisième équipement de terminaison au travers duquel les données émises par le premier équipement client sont destinées à être transmises.

8. Programme d'ordinateur, **caractérisé en ce qu'**il comprend des instructions de code de programme pour la mise en oeuvre des étapes du procédé de communication selon la revendication 1 lorsque le programme est exécuté par un processeur.

9. Support d'enregistrement lisible par un dispositif de configuration sur lequel est enregistré le programme selon la revendication 8.

## Patentansprüche

1. Verfahren zur Kommunikation zwischen einer ersten Abschlusseinrichtung (PE2) und wenigstens einer zweiten und einer dritten Abschlusseinrichtung (PE1, PE3), die zu einem paketvermittelten Netz gehören, wobei eine erste Pseudowire (pw1) zwischen der ersten und der zweiten Abschlusseinrichtung aufgebaut ist und eine zweite Pseudowire (pw2) zwischen der ersten und der dritten Abschlusseinrichtung aufgebaut ist, wobei das Verfahren die folgenden Schritte umfasst, die von der ersten Abschlusseinrichtung durchgeführt werden:
- Abfangen eines Datenrahmens, der von einer mit der zweiten Abschlusseinrichtung verbundenen ersten Client-Einrichtung an eine zweite Client-Einrichtung gesendet wurde, wobei der Datenrahmen eine Kennung der ersten Client-Einrichtung und eine Kennung der zweiten Client-Einrichtung umfasst,
- Bestimmung eines Identifikationsparameters der zweiten Abschlusseinrichtung, mit der die erste Client-Einrichtung verbunden ist, aus der Kennung der ersten Client-Einrichtung,
- Bestimmung eines Identifikationsparameters der dritten Abschlusseinrichtung, mit der die zweite Client-Einrichtung verbunden ist, aus der Kennung der zweiten Client-Einrichtung,
- Senden, an die zweite Abschlusseinrichtung, einer Aufbauanforderung für eine dritte Pseudowire zwischen der zweiten Abschlusseinrichtung und der dritten Abschlusseinrichtung, über welche die Daten, die von der ersten Client-Einrichtung gesendet wurden, übertragen werden sollen.

2. Verfahren zur Kommunikation nach Anspruch 1, wobei die Aufbauanforderung für die dritte Pseudowire einen Parameter umfasst, der für die maximal zulässige Bereitschaftsdauer für die dritte Pseudowire repräsentativ ist.

3. Verfahren zur Kommunikation nach Anspruch 2, wobei die Aufbauanforderung für die Pseudowire einen Identifikationsparameter der zweiten Abschlusseinrichtung, den Identifikationsparameter der dritten Abschlusseinrichtung, einen Parameter, der angibt, dass es sich um eine Aufbauanforderung für die dritte Pseudowire handelt, und einen Identifikationsparameter eines virtuellen Netzes, zu dem die erste und die zweite Client-Einrichtung gehören, umfasst.

4. Verfahren zur Kommunikation nach Anspruch 3, wobei die Aufbauanforderung für die dritte Pseudowire außerdem einen Identifikationsparameter der ersten Client-Einrichtung und einen Identifikationsparameter der zweiten Client-Einrichtung umfasst.

5. Verfahren zur Kommunikation nach Anspruch 1, welches einen Schritt des Empfangs einer Nachricht zur Bestätigung des Aufbaus der dritten Pseudowire umfasst, die von der zweiten Abschlusseinrichtung gesendet wurde.

6. Verfahren zur Kommunikation nach Anspruch 1, welches einen Schritt des Sendens, an die zweite Abschlusseinrichtung, einer Anforderung zur Entfernung der dritten Pseudowire umfasst.

7. Abschlusseinrichtung (PE2), die in der Lage ist, mit wenigstens einer zweiten und einer dritten Abschlusseinrichtung (PE1, PE3) zu kommunizieren, die zu einem paketvermittelten Netz gehören, wobei eine erste Pseudowire (pw1) zwischen der Abschlusseinrichtung und der zweiten Abschlusseinrichtung aufgebaut ist und eine zweite Pseudowire (pw2) zwischen der Abschlusseinrichtung und der dritten Abschlusseinrichtung aufgebaut ist, wobei die Abschlusseinrichtung umfasst:
- Mittel zum Abfangen eines Datenrahmens, der von einer mit der zweiten Abschlusseinrichtung verbundenen ersten Client-Einrichtung an eine zweite Client-Einrichtung gesendet wurde, wobei der Datenrahmen eine Kennung der ersten Client-Einrichtung und eine Kennung der zweiten Client-Einrichtung umfasst,
- Mittel zur Bestimmung eines Identifikationsparameters der zweiten Abschlusseinrichtung, mit der die erste Client-Einrichtung verbunden ist, aus der Kennung der ersten Client-Einrichtung,
- Mittel zur Bestimmung eines Identifikationsparameters der dritten Abschlusseinrichtung, mit der die zweite Client-Einrichtung verbunden ist, aus der Kennung der zweiten Client-Einrichtung,
- Mittel zum Senden, an die zweite Abschlusseinrichtung, einer Aufbauanforderung für eine dritte Pseudowire zwischen der zweiten Abschlusseinrichtung und der dritten Abschlusseinrichtung, über welche die Daten, die von der ersten Client-Einrichtung gesendet wurden, übertragen werden sollen.

8. Computerprogramm, **dadurch gekennzeichnet, dass** es Programmcodeanweisungen zur Durchführung der Schritte des Verfahrens zur Kommunikation nach Anspruch 1, wenn das Programm von einem Prozessor ausgeführt wird, umfasst.

9. Aufzeichnungsmedium, das von einer Konfigurationsvorrichtung gelesen werden kann und auf dem das Programm nach Anspruch 8 aufgezeichnet ist.

## Claims

1. Method of communication between a first item of termination equipment (PE2) and at least one second and one third item of termination equipment (PE1, PE3) belonging to a packet-switching network, a first pseudo-wire (pw1) being established between the first and the second items of termination equipment, and a second pseudo-wire (pw2) being established between the first and the third items of termination equipment, the method comprising the following steps carried out by the first item of termination equipment:
- interception of a data frame sent by a first item of customer equipment, connected to the second item of termination equipment, to a second item of customer equipment, the data frame comprising an identifier of the first item of customer equipment and an identifier of the second item of customer equipment,
- determination of a parameter for identifying the second item of termination equipment to which the first item of customer equipment is connected, based on the identifier of the first item of customer equipment,
- determination of a parameter for identifying the third item of termination equipment to which the second item of customer equipment is connected, based on the identifier of the second item of customer equipment,
- transmission, to the second item of termination equipment, of a request to establish a third pseudo-wire between the second item of termination equipment and the third item of termination equipment through which the data sent by the first item of customer equipment are intended to be transmitted.

2. Communication method according to Claim 1, wherein the request to establish the third pseudo-wire comprises a parameter representative of the maximum allowed idle time for the third pseudo-wire.

3. Communication method according to Claim 2, wherein the request to establish the pseudo-wire comprises a parameter for identifying the second item of termination equipment, the parameter for identifying the third item of termination equipment, a parameter indicating that it involves a request to establish the third pseudo-wire and a parameter for identifying a virtual network to which the first and the second items of customer equipment belong.

4. Communication method according to Claim 3, wherein the request to establish the third pseudo-wire also comprises a parameter for identifying the first item of customer equipment and a parameter for identifying the second item of customer equipment.

5. Communication method according to Claim 1, comprising a step of receiving a message confirming the establishment of the third pseudo-wire sent by the second item of termination equipment.

6. Communication method according to Claim 1, comprising a step of transmitting, to the second item of termination equipment, a request to delete the third pseudo-wire.

7. Item of termination equipment (PE2) capable of communicating with at least one second and one third item of termination equipment (PE1, PE3) belonging to a packet-switching network, a first pseudo-wire (pw1) being established between said item of termination equipment and the second item of termination equipment, and a second pseudo-wire (pw2) being established between said item of termination equipment and the third item of termination equipment, the item of termination equipment comprising:
- means for intercepting a data frame sent by a first item of customer equipment, connected to the second item of termination equipment, to a second item of customer equipment, the data frame comprising an identifier of the first item of customer equipment and an identifier of the second item of customer equipment,
- means for determining a parameter for identifying the second item of termination equipment to which the first item of customer equipment is connected, based on the identifier of the first item of customer equipment,
- means for determining a parameter for identifying the third item of termination equipment to which the second item of customer equipment is connected, based on the identifier of the second item of customer equipment,
- means for transmitting, to the second item of termination equipment, a request to establish a third pseudo-wire between the second item of termination equipment and the third item of termination equipment through which the data sent by the first item of customer equipment are intended to be transmitted.

8. Computer program, **characterized in that** it comprises program-code instructions for carrying out the steps of communication method according to Claim 1, when the program is executed by a processor.

9. Recording medium that can be read by a configuration device on which the program according to Claim 8 is recorded.
